# EUROPEAN PATENT APPLICATION

(11) **EP 3 971 026 A1**
(43) Date of publication of application: **23.03.2022**
(21) Application number: 21197311.0
(22) Date of filing: 17.09.2021
(51) Int. Cl.: B60N 2/68

(54) **A BACKREST IN THERMOPLASTIC POLYMERIC MATERIAL FOR MOTOR VEHICLE SEATS**

(30) Priority: 18.09.2020 IT 202000022000
(71) Applicant: Sabelt S.p.A., 10129 Torino (IT)
(72) Inventor: MARENGO, Roberto, I-10127 TORINO (IT)
(74) Representative: Fioravanti, Corrado

(57) **Abstract**

A backrest (10) for a front seat of a motor vehicle comprises a body (11) of thermoplastic polymeric material filled with glass fibers and two metal stiffening brackets (20), transversely spaced apart from each other, integral with the backrest body. Each bracket (20) has an angular shape with a central portion (21) fixed to the central wall (12) of the backrest and a side flange (22), forming an angle with the central portion (21). Each side flange (22) has at least one engagement seat (28) for mounting the backrest in a reclining manner about a horizontal axis. The stiffening brackets (20) are not visible on the rear surface (14) of the backrest body, which has one or more surface decorative elements (30).

## Description

### Technical field

The present invention relates to a backrest made of a thermoplastic polymeric material for an automotive seat.

### Background art

Automotive seats are known which are constructed with a structural part made of composite materials, such as carbon fiber or fiberglass, combining a remarkable mechanical stiffness with a fine esthetic appearance. These seats, which are mainly used on sports cars, involve high manufacturing costs, which are reflected in the final price of the seat.

EP 3245098 B1 discloses a backrest made of glass fiber- or carbon fiber-filled thermoplastic polyamide material into which two transversely spaced stiffening elements made of thermoplastic material and reinforced with unidirectional glass or carbon fibers are embedded by overmolding.

US 2007/057493 A1 discloses a motor vehicle backrest having a fiber-reinforced polymeric plastic shell. A side airbag module is mounted to a metal adapter, which extends vertically along an outer, uncoated side of the backrest shell and is connected to a swivel device to recline the backrest.

### Summary of the invention

An object of the present
invention is to provide a backrest for a motor vehicle seat with properties of mechanical resistance and stiffness and an esthetic aspect comparable to that of seats made of carbon fiber composite material, but which may be produced with much lower manufacturing costs.

These and other objects and advantages, which will be better clarified below, are achieved, according to the present invention, by a backrest for a seat having the features set forth in claim 1. Preferred embodiments of the device are defined in the dependent claims.

In short, the present invention proposes to construct the backrest body for an automotive seat, in particular for a front seat, using a thermoplastic polymeric material, preferably filled with glass fiber. The body of the backrest is produced by injection molding. Two vertical reinforcing brackets are rigidly attached to the thermoplastic polymer body. The backrest body has a rear surface that is preferably left at least partially uncovered and visible in the installed condition, whereby one or more surface decorative elements are visible, having an appearance of a higher quality material, e.g., carbon, to enhance the esthetics of the seat but at a significantly lower manufacturing cost and selling price than a seat made of carbon or fiberglass composite material. The stiffening brackets have an angular shape with a central portion and a side flange. The side flange extends to a lower side end of the backrest and has at least one engagement element or seat for mounting the backrest in a reclining manner about a horizontal axis.

### Brief description of the drawings

The features and advantages of a backrest according to the present invention will be apparent from the following description, given by way of example and non-limiting. Reference is made to the appended drawings, wherein:
Fig. 1 is a perspective view of a first embodiment of a backrest according to the present invention;
Fig. 2 is a front perspective view of part of the backrest in Fig. 1;
Fig. 3 is a rear view of the backrest in Fig. 1;
Fig. 4 illustrates a surface decoration that may be visibly applied to a rear surface of the backrest; and
Fig. 5 and 6 are perspective views of the front and back, respectively, of a backrest according to a second embodiment of the invention.

### Detailed description

Referring to the drawings, a backrest for a seat of a motor vehicle is shown collectively with reference numeral 10. The backrest 10 is intended, particularly but not exclusively, to be the backrest of a front seat of a motor vehicle.

Throughout this description and in the claims, the terms and expressions indicating positions and orientations are intended to refer to the condition of being installed on a motor vehicle. Thus, terms such as "longitudinal," "front," and "rear" are to refer to the direction of travel of the vehicle. "Side" indicates a side parallel to the longitudinal direction of travel.

The backrest 10 features a body 11 that is constructed as a shell made of thermoplastic polymeric material. Preferably, the thermoplastic polymeric material comprises short glass fibers in a matrix made of a polymeric material. The glass fiber filler may be between 20 and 40% by weight, for example 30% by weight.

The body 11, due to the moldability of the thermoplastic polymeric material, is advantageously manufactured by injection molding.

A polyamide nylon polymer, preferably filled with glass fibers, may be used as a thermoplastic material. Alternatively, acetal homopolymers and copolymers, polyester, polyphenylene oxide (PPO/Noryl), polycarbonate, polyethersulfone, all preferably glass-filled, may also be chosen. These materials have excellent qualities in terms of workability and mechanical strength, but do not involve the time and manufacturing cost of a carbon fiber composite material or plastic materials reinforced with glass fiber (fiberglass), which are known to be formed by superimposing relatively large sheets of fabric made of long fibers, shaped, and inserted into a mold, and then impregnated with resin.

The body 11 has a main central portion or wall 12, which is slightly concave with forward facing concavity, having a front surface 13 and an opposing rear surface 14, and two left and right side portions or flanges 15 and 16, which each form an angle connected with the central portion 13, to contain the sides of an occupant of the seat.

Two lateral metal stiffening brackets 20, spaced transversely apart, are rigidly integral with the body 11 of the backrest and extend in directions defined herein as "vertical."

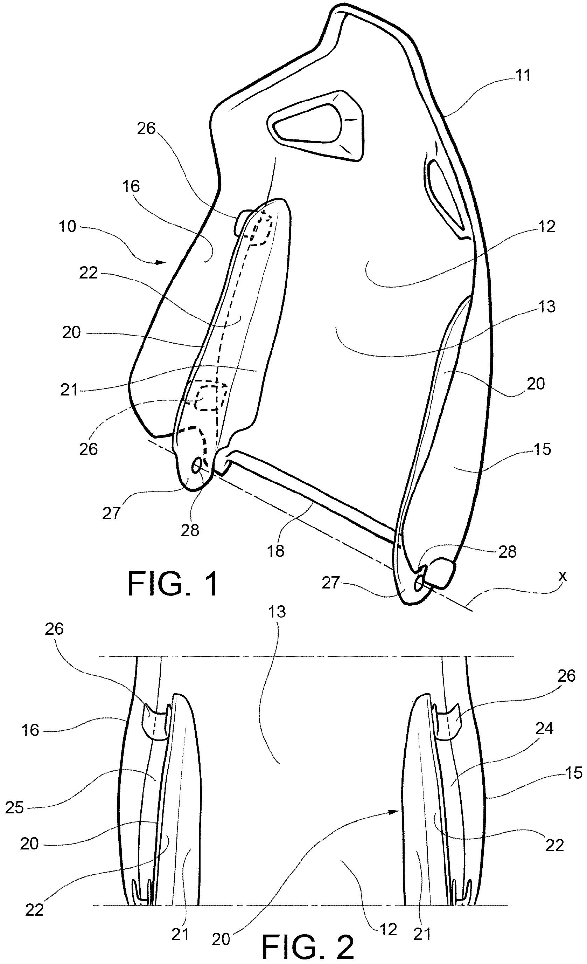

Embodiments may provide that metal brackets 20 extend from a lower end of the backrest toward its top (Fig. 1).

Preferably, the stiffening brackets 20 extend vertically along the backrest for more than half of its vertical length. In the embodiment of Fig. 1, the brackets 20 extend from a lower edge 18 of the body 11 of the backrest to an upper level at half the height of the backrest.

The brackets 20 may be made integral with the body of the backrest by applying structural adhesive, or by overmolding the thermoplastic polymeric material, or alternatively by mechanical fastener elements, such as screws and/or rivets.

For aesthetic reasons, the stiffening brackets 20 are not visible on the rear surface 14 of the backrest body. Preferably, as in the embodiment shown in the drawings, the brackets 20 are bonded to the front surface 13 of the central wall 12 of the backrest body 11 by means of a structural adhesive. In use, the brackets 20 and the front surface 13 of the body 11 are covered anteriorly by a padded cover (not shown) that covers the front of the backrest and the facing surfaces of the left and right side portions 15, 16.

In the embodiments shown by way of example, each bracket 20 has an angular shape when viewed in horizontal cross section, which gives the bracket high flexural stiffness.

Each stiffening bracket 20 may be substantially L-shaped in horizontal cross section, with a central main portion 21 and a side portion or flange 22, forming an angle with the main portion 21.

Each stiffening bracket 20 may be joined to the backrest body 11 by applying adhesive to the interface between the main portion 21 of a stiffening bracket 20 and the surface 13 of the central wall 12 of the body 11, and/or to the interface between the side flange 22 of a stiffening bracket 20 and the left 15 or right side wall 16 of the body 11.

Embodiments may provide for the stiffening brackets 20 to be partially embedded and included by molding into the body 11 of the backrest. Additionally, or alternatively, other embodiments (not shown) may provide for brackets to be mechanically fixed to the front surface 13 of the central wall 12 of the body of the backrest by means of mechanical fastener elements.

As illustrated in the embodiment of Fig. 1 and 2, the side or flange portion 22 of each of the two brackets 20 may be spaced transversely from the side wall 15 or 16 nearest thereto, whereby a respective space 24, 25 located between the side portion of the bracket, the side wall 15 or 16 of the backrest, and the central wall 12 of the backrest is defined. At least one of the spaces 24 or 25 may accommodate a side airbag.

Spacer elements 26, such as U-shaped spacers, may be fixed to the side walls 15, 16 of the backrest body to maintain a minimum transverse distance between each bracket and the adjacent side wall to ensure that a forward open space 24, 25 is maintained for the purpose of allowing proper deployment of the airbag in cases of need.

According to an alternative embodiment (not shown) to that of Fig. 1 and 2, the side or flange portion 22 of each of the two brackets 20 may be bonded by adhesive to the side wall 15 or 16 nearest thereto.

The side flanges 22 of the metal stiffening brackets 20 each have a portion 27, located at a lower side end of the backrest, that may protrude inferiorly from a lower edge 18 of the body 11 of the backrest (Fig. 1).

Each lower portion 27 of the bracket side flanges 22 has a respective opening 28 or alternatively another engagement element, such as a pin, for mounting the backrest in a reclining mode or at an adjustable angle with respect to a seat cushion or seat part (not shown) of the seat.

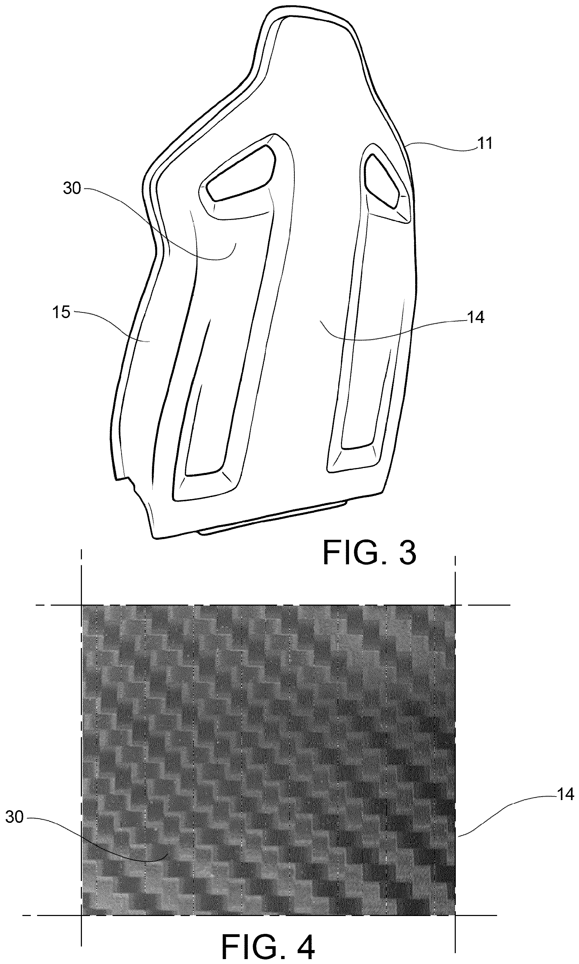

According to preferred embodiments, the rear surface 14 of the backrest body 11 is left uncovered when it is installed in the motor vehicle. As illustrated in Fig. 3, the rear surface 14 may have one or more surface decorations 30 having an appearance of a higher quality material, such as carbon (Fig. 4), to enhance the esthetics of the seat. Surface decorations may be obtained directly by molding, or by applying inserts or surface coatings.

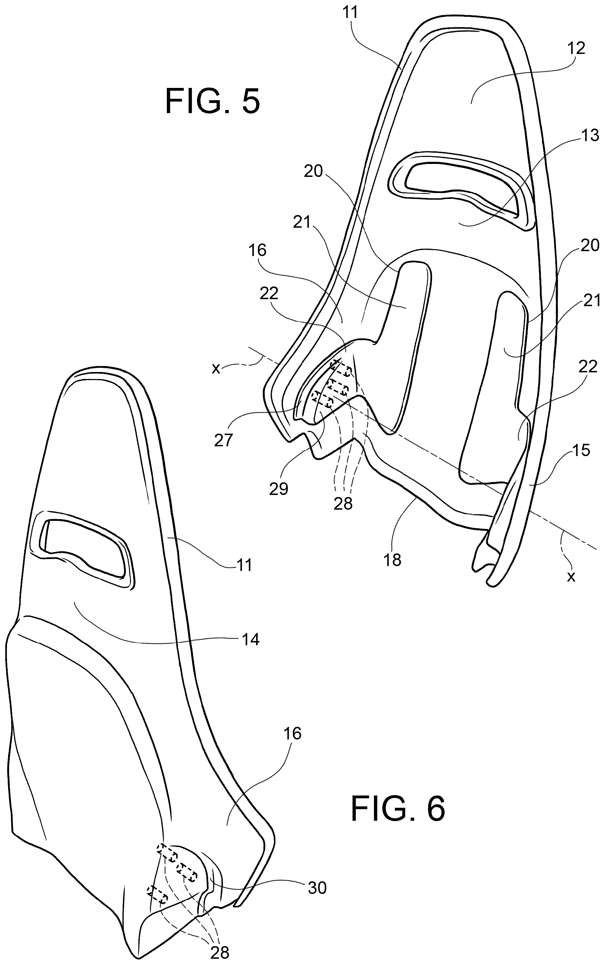

Fig. 5 and 6 illustrate an alternative embodiment in which the side flanges 22 of the brackets 20 are each rigidly connected to one or more bushings 28, three in number in this example for each side flange 22). The bushings 28 are attached to the bracket 20 and the left or right flanges 15, 16 of the backrest body 11, respectively. The bushings 28 serve as engagement seats for mounting the backrest to a swivel device (or "recliner," not shown) for reclining the backrest about the horizontal and transverse axis x.

The side wings 22 may each form a transversely thickened portion 29 that accommodates the bushings 28, said bushings facing the outer lateral surface of the wings 15, 16 of the body 11 of the backrest.

Various aspects and embodiments of the backrest have been described. It is understood that each embodiment may be combined with any other embodiment. Furthermore, the invention is not limited to the described embodiments, but may be varied within the scope defined by the appended claims.

## Claims

1. A backrest for the front seat of a motor vehicle, comprising:
a body (11) of glass-filled thermoplastic polymeric material, with a central wall (12) having a front surface (13) and an opposite rear surface (14),
two metal stiffening brackets (20), transversely spaced from one another and rigidly integral with the central wall (12) of the backrest body (11), wherein said metal stiffening brackets extend along the backrest body from a lower edge (18) of the backrest body at least up to an upper half of the backrest body (11), and wherein each stiffening bracket has an angular shape with a central portion fixed to the central wall (12) of the backrest of the backrest body and a side flange (22) forming an angle with the central portion (21), and wherein each side flange (22) of the brackets (20) has a respective portion (27) which is located at a lower side end of the backrest and provides at least one an engagement element or seat (28) for mounting the backrest in a reclining manner around a horizontal axis (x),
wherein the stiffening brackets (20) are not visible on the rear surface (14) of the backrest body and wherein said rear surface (14) has one or more surface decorative elements (30).

2. A backrest according to claim 1, wherein the backrest body (11) has two left (15) and right (16) side walls which each form an angle with the central wall (12), wherein the side flange (22) of each stiffening bracket (20) is fixed to a respective one of the two left (15) or right (16) side walls of the backrest body (11).

3. A backrest according to claim 1 or 2, wherein the central portion (21) of each stiffening bracket (20) is fixed to the front surface (13) of the central portion (12) of the backrest body (21) either by a structural adhesive, or is at least partially embedded and included by molding into said wall central wall (12), or is mechanically fixed onto the front surface (13) of said central wall (12) by mechanical fastener elements.

4. A backrest according to claim 3, wherein the side flange (22) of each stiffening bracket (20) is fixed to a respective left (15) or right (16) side wall of the backrest body (21) either by a structural adhesive, or is at least partially embedded and included by molding into said side wall (15 or 16), or is mechanically fixed to said side wall (15 or 16) by mechanical fastener elements.

5. A backrest according to any one of the preceding claims, wherein the engagement seats (28) comprise a pair of holes, each formed in one of the two lower end portions (27) of the side flanges (22) of the stiffening brackets and aligned along a transverse horizontal axis (x).

6. A backrest according to any one of the preceding claims, wherein the engagement seats (28) are provided by bushings respectively attached to the side flanges (22) of the stiffening brackets (20), for mounting the backrest in a reclining manner about a horizontal and transverse axis (x).

7. A backrest according to claim 6, wherein the side flanges (22) each form a transversely thickened portion (29) accommodating one or more of said bushings.

8. A backrest according to any one of the preceding claims, wherein the two lower end portions (27) of the side flanges (22) of the stiffening brackets protrude inferiorly from a lower edge (18) of the body (11).

9. A backrest according to any one of the preceding claims, wherein the thermoplastic polymeric material comprises short glass fibers in a matrix of a polymeric material, wherein the glass fiber filler is comprised between 20 and 40% by weight, preferably approximately 30% by weight.

10. A backrest according to any one of the preceding claims, wherein the thermoplastic polymeric material is selected from the group consisting of: polyamide nylon polymer, acetal homopolymers and copolymers, polyester, polyphenylene oxide (PPO/Noryl), polycarbonate, polyethersulfone.

11. A vehicle seat comprising a backrest according to any one of the preceding claims.
